# Europäisches Patentamt
# European Patent Office
# Office européen des brevets

(19)

(11) Veröffentlichungsnummer: **0 259 634 B1**

(12) **EUROPÄISCHE PATENTSCHRIFT**

(45) Veröffentlichungstag der Patentschrift: **13.11.91**

(51) Int. Cl.⁵: **B60K 41/24**

(21) Anmeldenummer: **87111615.8**

(22) Anmeldetag: **11.08.87**

(54) **Vorrichtung zur Kupplungsbetätigung.**

(30) Priorität: **10.09.86 DE 3630750**

(43) Veröffentlichungstag der Anmeldung:
**16.03.88 Patentblatt 88/11**

(45) Bekanntmachung des Hinweises auf die
Patenterteilung:
**13.11.91 Patentblatt 91/46**

(84) Benannte Vertragsstaaten:
**AT DE FR GB**

(56) Entgegenhaltungen:
**DE-A- 3 545 500      DE-B- 2 251 548**
**GB-A- 2 163 511      GB-A- 2 165 914**
**US-A- 3 863 730      US-A- 4 491 919**

(73) Patentinhaber: **ROBERT BOSCH GMBH**
**Postfach 50**
**W-7000 Stuttgart 1(DE)**

(72) Erfinder: **Jonner, Wolf-Dieter, Ing. (grad.)**
**Burgunderstrasse 25**
**W-7141 Beilstein(DE)**
Erfinder: **Zechmann, Jürgen**
**Max-Planck-Strasse 10/1**
**W-7100 Heilbronn(DE)**

**Beschreibung**

Stand der Technik

Die Erfindung geht aus von einer Vorrichtung zur Kupplungsbetätigung nach der Gattung des Hauptanspruchs. Eine derartige Kupplungsbetätigung ist bekannt (GB-A-2 165 914).

Zum Stand der Technik sind zunächst Vorrichtungen zur Kupplungsbetätigung zu nennen, bei denen die Betätigung der Ausrückvorrichtung nicht unmittelbar auf mechanischem Wege durch das Kupplungspedal erfolgt, sondern bei denen die Ausrückbewegung durch ein pneumatisch oder hydraulisch arbeitendes Betätigungsorgan in Abhängigkeit von elektrischen Steuersignalen einer Steuereinheit erfolgt. Diese Steuersignale wiederum werden in Abhängigkeit von Motordrehzahl, Motorlast und der Ausrückposition an der Kupplung gebildet. Derartige Vorrichtungen finden ihre Anwendung vor allem bei Fahrzeugen mit halbautomatischen Getrieben, bei denen zwar der Gangwechsel noch vom Fahrer auf übliche Weise durchgeführt wird, der Kupplungsvorgang sich jedoch für den Fahrer auf das Betätigen eines Schaltkontaktes reduziert. Das eigentliche "Dosieren" der Kupplung - welches vor allem während des Anfahrens wichtig ist - wird dann ausschließlich von der Steuereinheit vorgenommen und ist vom Fahrer nicht mehr beeinflußbar.

Derartige Systeme weisen im Vergleich zu den herkömmlichen, ausschließlich vom Fahrer betätigbaren Systemen den Vorteil eines gesteigerten Bedienungskomforts auf, ohne den Nachteil der hohen Produktionskosten vollautomatischer Getriebe.

Dem Vorteil des hohen Bedienungskomforts einer derartigen Vorrichtung zur Kupplungsbetätigung steht jedoch der Nachteil gegenüber, daß ein Eingriff des Fahrers in kritischen Fahrsituationen, vor allem ein Dosieren der Kupplung, nicht möglich ist.

Außerdem ist es bekannt (US-PS 44 91 919), bei einem mit einer Blockierschutzeinrichtung (ABS) ausgerüsteten Kraftfahrzeug mit bestimmter Betriebsbremsen-Konfiguration gleichzeitig mit dem Einsetzen von auf das Bremssystem wirkenden ABS-Regelfunktionen durch eine entsprechende Druckbeaufschlagung des Kupplungszylinders über ein Mehrwege-Magnetventil die Antriebsverbindung zu den Antriebsrädern zu unterbrechen, also auszukuppeln, um eine eventuelle Bremswirkung der Brennkraftmaschine auf die von ihr angetriebenen Räder wenigstens zeitweise zu unterbrechen. Hierdurch lassen sich gegenseitige Beeinflussungen vermeiden. Das Wiedereinkuppeln erfolgt unabhängig vom Willen des Fahrzeugführers, vorzugsweise zeitgesteuert, um einen Kupplungsruck zu vermeiden.

Die eingangs genannte Vorrichtung nach der GB-A-2 165 914 verwendet ein in üblicher Weise zu betätigendes Kupplungspedal, das jedoch nicht mechanisch oder hydraulisch auf die Kupplung wirkt, sondern das mit einem Sensor verbunden ist, der seinerseits ein dem Pedalweg entsprechendes analoges Signal erzeugt, das der Steuereinheit zugeführt wird.

Der Vorteil der Zwischenschaltung einer derartigen Steuereinheit besteht in der sich damit anbietenden Möglichkeit, neben dem Pedalweg zusätzliche, für die Betätigung der Kupplung wesentliche Signale zu verarbeiten. Insbesondere besteht die Möglichkeit, innerhalb einer Blockierschutzregelung (ABS) oder einer Antriebsschlupfregelung (ASR) ein Aus- und Einkuppeln herbeizuführen.

Der Erfindung liegt die Aufgabe zugrunde, die genannte Vorrichtung in vorteilhafter Weise derart weiterzubilden, daß sie auch im ABS- oder ASR-Betieb so arbeitet, daß die entsprechenden Signale der Regeleinheit dominant verarbeitet werden.

Diese Aufgabe wird gemäß der Erfindung bei einer gattungsgemäßen Vorrichtung durch die kennzeichnenden Merkmale des Patentanspruchs gelöst.

Zeichnung

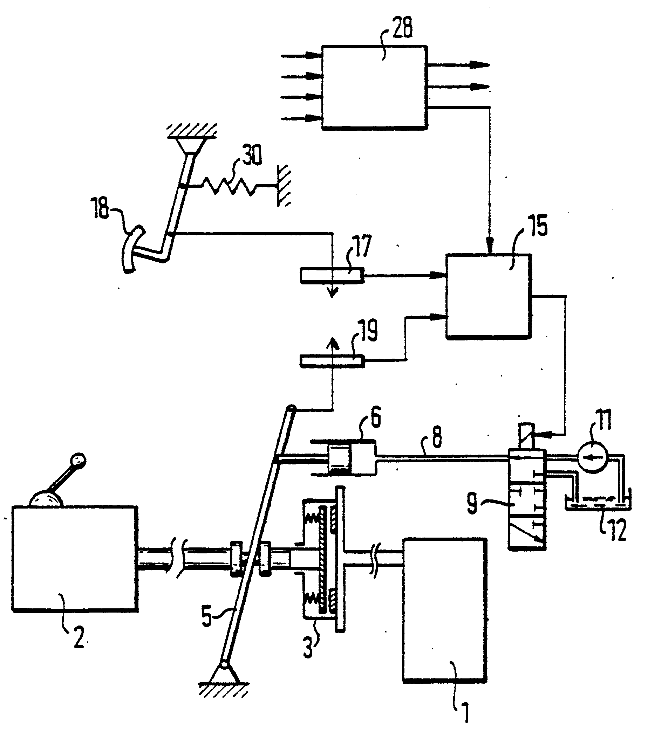

Ein Ausführungsbeispiel einer erfindungsgemäßen Vorrichtung zur Kupplungsbetätigung ist in der Zeichnung schematisch dargestellt und in der nachfolgenden Beschreibung näher erläutert.

Beschreibung des Ausführungsbeispieles

In der Zeichnung ist mit Bezugzeichen 1 ein Motor, beispielsweise eine Brennkraftmaschine, bezeichnet, welcher mit einem Getriebe 2 unter Zwischenschaltung einer Kupplung 3 verbunden ist. Die mechanische Betätigung der Kupplung 3 erfolgt über einen Ausrückhebel 5, an dem der Arbeitskolben eines Betätigungszylinders 6 angreift. Der Betätigungszylinder 6 ist über eine Druckleitung 8 und ein Steuerventil 9 mit einer Druckmittelquelle verbunden, welche in erster Linie aus einer Druckmittelpumpe 11 und einem Vorratsbehälter 12 besteht. Das Steuerventil 9 ist elektrisch betätigbar und vorzugsweise in drei Stellungen schaltbar, wobei in der ersten Stellung eine Strömungsverbindung zwischen der Druckmittelpumpe 11 und dem Betätigungszylinder 6 hergestellt und eine Verbindung zum Vorratsbehälter 12 gesperrt wird, in der zweiten Stellung die Druckmittelpumpe 11, der Vorratsbehälter 12 und der Betätigungszylinder 6 voneinander getrennt sind und in der dritten Stellung die Strömungsverbindung von der Druckmittelpumpe 11 zum Betätigungszylinder 6 gesperrt und ein Rückfluß von Druckmittel aus dem Betätigungszylinder 6 in den Vorratsbehälter 12 ermöglicht wird.

Die Ansteuerung des Steuerventils 9 erfolgt durch elektrische Ausgangssignale einer elektronischen Steuereinheit 15.

Der elektronischen Steuereinheit 15 werden mindestens drei Eingangssignale zugeführt:

Ein erstes Eingangssignal zur elektronischen Steuereinheit 15 kommt von einem ersten Wegaufnehmer 17. Dieser erste Wegaufnehmer 17 mißt die jeweilige Stellung eines Kupplungspedals 18, welches vom Fahrer, beispielsweise in üblicher Weise mit dem Fuß, betätigbar ist.

Ein zweites Eingangssignal wird von einem zweiten Wegaufnehmer 19 erzeugt und gibt die jeweilige Position des Ausrückhebels 5 wieder und damit die Lage der zusammenarbeitenden Kupplungsscheiben zueinander.

Ein drittes Eingangssignal zur elektronischen Steuereinheit 15 wird durch eine Regeleinheit 28 erzeugt, welche beispielsweise Teil einer Blockierungschutzregelung (ABS) oder einer Antriebsschlupfregelung (ASR) ist.

Am Kupplungspedal 18 greift die Kraft eines Widerstandsorgans 30, z.B. einer Feder, an, wodurch eine Betätigung des Kupplungspedals 18 nur entgegen der genau definierbaren Kraft dieses Widerstandsorgans 30 möglich ist. Durch das Widerstandsorgan 30 ist somit eine frei wählbare Pedalcharakteristik realisierbar. So kann etwa durch geeignete Reihen- bzw. Parallelschaltung verschiedener Federn bzw. Federsysteme die Kraftcharakteristik des Widerstandsorgans 30 in zweckmäßiger Weise festgelegt werden. Anstelle des ersten Wegaufnehmers 17 kann die Größe der Betätigung des Kupplungspedals 18 ebenfalls durch einen Druckaufnehmer ermittelt werden, welcher den Pedaldruck erfaßt. Auch der zweite Wegaufnehmer 19 ist durch einen Druckaufnehmer ersetzbar.

Die beschriebene Vorrichtung arbeitet in folgender Weise:

Lageänderungen des Kupplungspedals 18 bei Betätigung durch den Fahrer werden durch den ersten Wegaufnehmer 17 erfaßt und als Sollwerte der elektronischen Steuereinheit 15 zugewiesen. In der elektronischen Steuereinheit 15 erfolgt ein Vergleich zwischen Sollwert und Istwert, wobei der Istwert durch die Ausrücklage der Kupplung 3 gegen ist, welche durch den zweiten Wegaufnehmer 19 erfaßt wird. Bei einer Abweichung zwischen Ist- und Sollwert erfolgt eine entsprechende Ansteuerung des Steuerventils 9 durch die elektronische Steuereinheit 15. Wenn Istwert und Sollwert übereinstimmen, wird über die elektronische Steuereinheit 15 das Steuerventil 9 in jene zweite Stellung geschaltet, in welcher die Druckmittelpumpe 11, der Vorratsbehälter 12 und der Betätigungszylinder 6 voneinander getrennt sind. Die Übertragungscharakteristik zwischen der Größe der Betätigung des Kupplungspedals 18 und der Größe der Betätigung des Ausrückhebels 5 ist in der elektronischen Steuereinheit 15 festlegbar. Die entsprechende Übertragungsfunktion kann linear, degressiv, progressiv oder in anderer Weise verlaufen.

In der Fahrpraxis kann es nun vor allem bei Eis- und Schneeglätte zu dem Fall kommen, daß schon allein durch Herunterschalten in eine niedrigere Gangstufe und damit durch ein erhöhtes Motor-Bremsmoment der Kraftschluß zwischen Fahrzeugrad und Fahruntergrund abreißt und damit die seitliche Radführung nicht mehr gewährleistet ist - ein Zustand, welcher dem Zustand blockierender Räder ähnlich ist. Ein derartiger Fahrzustand kann auch bei einem Kraftfahrzeug eintreten, welches über ein auf das Bremssystem einwirkendes ABS verfügt. Da ein mit ABS ausgestattetes Fahrzeug bereits über Radgeschwindigkeits-Sensoren verfügt, gewinnt die beschriebene Vorrichtung zur Kupplungsbetätigung zusätzliche Bedeutung:

Registriert bei einem Fahrzeug, welches mit der beschriebenen Vorrichtung zur Kupplungsbetätigung ausgestattet ist, ein (in der Zeichnung nicht dargestellter) ABS-Sensor einen Schlupf zwischen Fahrzeugrad und Fahruntergrund, so gibt die Regeleinheit 28 (welche beispielsweise ein ABS-Steuergerät sein kann) ein entsprechendes elektrisches Signal an die elektronische Steuereinheit 15 ab. Dieses elektrische Signal wird von der elektronischen Steuereinheit 15 wie ein zweiter Sollwert behandelt, wobei dieser von der Regeleinheit 28 abgegebene Sollwert Präferenz gegenüber dem vom ersten Wegaufnehmer 17 abgegebenen Sollwert besitzt, d.h. bei einem Vorliegen beider Signale wird von der elektronischen Steuereinheit 15 das Signal der Regeleinheit 28 so verarbeitet, als ob es das einzige vorliegende Signal wäre. In diesem Fall wird durch den Betätigungszylinder 6 die Kupplung 3 ausgerückt. Motor 1 und Getriebe 2 werden also zuverlässig getrennt. Diese Ausrückposition der Kupplung 3 wird so lange durch die elektronischen Steuereinheit 15 aufrechterhalten, wie das entsprechende ABS-Signal der Regeleinheit 28 anliegt.

Wird durch den Fahrer das Kupplungspedal 18 bis zum Maximalanschlag durchgedrückt, während an der elektronischen Steuereinheit 15 noch das den ABS-Fall anzeigende Signal der Regeleinheit 28 anliegt - ein Zustand, von dem die elektronische Steuereinheit 15 dann ausgeht, wenn beispielsweise beide Sollwerte die gleiche Größe aufweisen - so wird das Signal der Regeleinheit 28 fortan ignoriert und die Stellung der Kupplung 3 nur noch dem von dem ersten Wegaufnehmer 17 erzeugten Sollwert nachgeführt. Kommt es daran anschließend zu einer Rücknahme des Kupplungspedals 18 durch den Fahrer, so wird die Stellung der Kupplung 3 nur dann dem vom ersten Wegaufnehmer 17 erzeugten Sollwert nachgeführt, wenn gleichzeitig das ABS-Signal der Regeleinheit 28 nicht mehr anliegt. Liegt jedoch bei der Rücknahme des Kupplungspedals 18 durch den Fahrer das ABS-Signal noch oder schon wieder an, so wird wieder das ABS-Signal der Regeleinheit 28 dominant verarbeitet, d.h. die Kupplung 3 bleibt vollständig ausgerückt.

Sollte aus bestimmten Gründen der Fahrer des Fahrzeuges noch während eines solchen ABS-Falls, also dann, wenn automatisch ausgekuppelt worden ist, das Fahrzeug beispielsweise für ein Ausweichmanöver beschleunigen wollen, so kann dies etwa bei Betätigung des Gaspedals des Kraftfahrzeuges erfolgen. Ein mit dem Gaspedal funktional verknüpfter Drosselklappenschalter weist in einem solchen Fall der elektronischen Steuereinheit 15 ein weiteres elektrisches Signal zu, bei dessen Auftreten das den ABS-Fall anzeigende Signal der Regeleinheit 28 unberücksichtigt bleibt und die Größe der Betätigung der Kupplung 3 der Größe der Betätigung des Kupplungspedals 18 nachgeführt wird.

Diese Möglichkeit, das nach dem Auftreten eines Signales der Regeleinheit 28 erfolgte automatische Auskuppeln der Kupplung 3 durch Betätigung des Gaspedals wieder aufzuheben, kann dann von größter Wichtigkeit sein, wenn beispielsweise während eines ABS-Vorganges das Fahrzeug vom Fahrer beschleunigt werden muß.

Ein weiterer Anwendungsfall der erfindungsgemäßen Vorrichtung besteht in einem Zusammenwirken mit einer Antriebsschlupfregelung (ASR). So kann auch im Falle eines Antriebsschlupfes zwischen Fahrzeugrad und Fahruntergrund die Regeleinheit 28 - welche auch ein ASR-Steuergerät sein kann - der elektronischen Steuereinheit 15 ein elektrisches Signal zuweisen, welches zu einem Ausrücken der Kupplung 3 führt.

## Patentansprüche

1. Vorrichtung zur Kupplungsbetätigung mit einem eine Kupplung in Abhängigkeit von einem Ausgangssignal einer elektronischen Steuereinheit ein- und ausrückenden Betätigungsorgan, mit einem ersten Sensor (17), welcher die Größe der Betätigung eines Kupplungspedals (18) erfaßt und welcher der elektronischen Steuereinheit (15) ein Meßsignal zuweist, dessen Größe von der Stellung des Kupplungspedals (18) abhängt, und mit einem zweiten Sensor, welcher der elektronischen Steuereinheit (15) ein weiteres Meßsignal zuweist, welches von der Stellung des Betätigungsorgans (6) abhängt, wobei die elektronische Steuereinheit (15) über einen an den ersten Sensor (17) angeschlossenen Sollwerteingang und einen an den zweiten Sensor (19) angeschlossenen Istwerteingang verfügt, dadurch gekennzeichnet, daß eine Signalübertragungseinrichtung vorgesehen ist, welche bei Vorliegen einer Blockierschutz- oder Antriebsschlupfschutz-Funktion (ABS oder ASR) der elektronischen Steuereinheit (15) ein zusätzliches, in der Regeleinheit (28) erzeugtes Signal zuführt, als Folge dessen das Betätigungsorgan (6) die Kupplung (3) ausrückt und die bei gleichzeitigem Vorliegen des Meßsignals des ersten Sensors (17) und des zusätzlichen Signals der Regeleinheit (28) das gleiche Ausgangssignal bildet wie bei einem ausschließlichen Vorliegen des zusätzlichen Signals der Regeleinheit (28).

2. Vorrichtung nach Anspruch 1, dadurch gekennzeichnet, daß bei einer maximalen Auslenkung des Kupplungspedals (18) die elektronische Steuereinheit (15) das gleiche Ausgangssignal bildet wie bei einem ausschließlichen Vorliegen des Meßsignals des ersten Sensors (17).

## Claims

1. Clutch actuating system with an actuating member which engages and releases a clutch as a function of an output signal of an electronic control unit, with a first sensor (17), which detects the magnitude of the actuation of a clutch pedal (18) and which assigns to the electronic control unit (15) a measurement signal the magnitude of which depends on the position of the clutch pedal (18), and with a second sensor which assigns to the electronic control unit (15) a further measurement signal which depends on the position of the actuating member (6), the electronic control unit (15) having a desired-value input connected to the first sensor (17) and an actual-value input connected to the second sensor (19), characterised in that a signal transmission device is provided which, in the presence of an anti-lock or drive-slip control function (ASS or ASR) feeds the electronic control unit (15) an additional signal produced in the regulating unit (28), as a result of which the actuating member (6) releases the clutch (3) and which, in the event of the simultaneous presence of the measurement signal of the first sensor (17) and of the additional signal of the regulating unit (28), forms the same output signal as in the event of the presence only of the additional signal of the regulating unit (28).

**2.** System according to Claim 1, characterised in that, in the event of a maximum deflection of the clutch pedal (18), the electronic control unit (15) forms the same output signal as in the event of the presence only of the measurement signal of the first sensor (17).

**Revendications**

**1.** Dispositif d'actionnement d'un embrayage avec un organe d'actionnement de l'embrayage et du débrayage dépendant d'un signal de sortie issu d'un dispositif électronique de commande, avec un premier capteur (17) qui enregistre l'importance de l'action sur une pédale d'embrayage (18) et qui délivre au dispositif électronique de commande un signal de mesure dont la valeur dépend de la position de la pédale d'embrayage, et avec un deuxième capteur qui délivre au dispositif électronique de commande (15) un deuxième signal de mesure dépendant de la position de l'organe d'actionnement (6), le dispositif électronique de commande (15) disposant d'une valeur théorique liée au premier capteur et d'une valeur effective liée au deuxième capteur, caractérisé en ce qu'il est prévu un dispositif de transmission de signal qui, dans le cas de l'existence d'une fonction anti-blocage ou d'une fonction de glissement de transmission (ABS ou ASR), délivre au dispositif électronique de commande (15) un signal supplémentaire issu du dispositif de régulation (28), à la suite duquel l'organe d'actionnement (6) débraye l'embrayage, et qui, dans le cas de l'existence simultanée du signal de mesure issu du premier capteur (17) et du signal supplémentaire issu du dispositif de régulation (28), délivre le même signal de sortie que dans le cas de la seule présence du signal supplémentaire issu du dispositif de régulation (28).

**2.** Dispositif conforme à la revendication 1, caractérisé en ce que, pour un enfoncement maximal de la pédale d'embrayage (18), le dispositif de commande électronique (15) délivre le même signal de sortie que dans le cas de la seule présence du signal de mesure issu du premier capteur (17).